# EUROPÄISCHE PATENTSCHRIFT

(11) **EP 1 095 338 B1**
(45) Veröffentlichungstag und Bekanntmachung des Hinweises auf die Patenterteilung: **23.10.2002**
(21) Anmeldenummer: 99945940.7
(22) Anmeldetag: 08.07.1999
(51) Int. Cl.: G06F 13/00

(54) **CAN-MODUL**
CAN MODULE
MODULE CAN

(30) Priorität: 09.07.1998 DE 19830803
(43) Veröffentlichungstag der Anmeldung: 02.05.2001
(73) Patentinhaber: Infineon Technologies AG, 81669 München (DE)
(72) Erfinder: VOWE, Achim, D-80469 München (DE)
(74) Vertreter: Jannig, Peter, Dipl.-Ing.
(86) Internationale Anmeldenummer: DE9902104
(87) Internationale Veröffentlichungsnummer: WO00003325

(56) Entgegenhaltungen:
- DE-U- 29 702 480
- US-A- 5 574 848
- US-A- 5 612 958
- EKIZ ET AL: "Performance Analysis of a CAN/CAN Bridge" PROCEEDINGS OF THE INTERNATIONAL CONFERENCE ON NETWORK PROTOCOLS, 29. Oktober 1996 (1996-10-29), XP002104040

## Beschreibung

Die vorliegende Erfindung betrifft eine Vorrichtung gemäß dem Oberbegriff des Patentanspruchs 1, d.h. ein CAN-Modul.

CAN-Module werden, wie die Bezeichnung schon andeutet, in sogenannten CANs (controller area networks) benötigt. Mit Hilfe von CANs können Steuereinrichtungen wie beispielsweise Mikrocontroller mit anderen Steuereinrichtungen, Aktoren, Sensoren etc. verbunden bzw. vernetzt werden. Der die einzelnen Komponenten verbindende CAN-Bus kann aus einer einzelnen Leitung bestehen; über ihn können zwischen den daran angeschlossenen Komponenten Daten ausgetauscht werden, wobei der Datenaustausch sehr sicher und effizient durchführbar ist.

Die besagten CAN-Module sind in der Regel Bestandteil der über den CAN-Bus vernetzbaren Komponenten und regeln den über den CAN-Bus erfolgenden Datenverkehr.

Ein möglicher praktischer Aufbau eines CAN-Moduls ist beispielsweise in dem von der Siemens AG herausgegebenen Buch mit dem Titel "C167 Derivates, 16-Bit CMOS Single-Chip Microcontrollers, User's Manual 03.96, Version 2.0" (Bestell-Nr. B158-H6651-G1-X-7600) auf Seite 23-1 bis 23-20 beschrieben.

Ein weiteres Beispiel eines CAN-Moduls ist offenbart in Dokument DE 297 02 480 U1.

CANs finden immer weitere Verbreitung, und auch immer mehr Mikrocontroller sind standardmäßig mit CAN-Modulen ausgestattet. Für bestimmte Anwendungen kann es sich sogar als günstig erweisen, wenn eine zu vernetzende Einheit über mehrere CAN-Busse mit anderen Komponenten verbindbar ist. In diesem Fall werden in der betreffenden Komponente einfach mehrere CAN-Module vorgesehen.

Das Vorsehen mehrerer CAN-Module in einer zu vernetzenden Einheit ist zwar technisch ohne weiteres realisierbar, ist aber wegen des relativ komplizierten Aufbaus der CAN-Module relativ aufwendig. Bei der Unterbringung der CAN-Module in einer integrierten Schaltung wird zudem sehr viel Chip-Fläche benötigt.

Dies ist ein Nachteil, dessen Beseitigung verständlicherweise äußerst wünschenswert ist.

Der vorliegenden Erfindung liegt daher die Aufgabe zugrunde, eine Möglichkeit zu finden, durch die sich eine über ein CAN zu vernetzende Komponente mit minimalem Aufwand gleichzeitig an mehrere CAN-Busse anschließen läßt.

Diese Aufgabe wird erfindungsgemäß durch ein CAN-Modul mit den im kennzeichnenden Teil des Patentanspruchs 1 beanspruchten Merkmalen gelöst.

Demnach sind im CAN-Modul mehrere Sätze von Speicherelementen zum Speichern von mehreren Sätzen von verschiedene Zustände des CAN-Moduls repräsentierenden Daten vorgesehen.

Dadurch können zumindest die wenig ausgelasteten Teile eines CAN-Moduls wie beispielsweise der für die Einhaltung des CAN-Protokolls zuständige Teil (der sogenannte bit stream processor bzw. BSP) desselben als gemeinsame Komponente für mehrere CAN-Busse genutzt werden. Durch eine solche gemeinsame Nutzung von zumindest Teilen des CAN-Moduls läßt sich der Aufwand, der zu treiben ist, um eine zu vernetzende Komponente an mehrere CAN-Busse anzuschließen, auf ein Minimum reduzieren.

Vorteilhafte Weiterbildungen der Erfindung sind den Unteransprüchen, der folgenden Beschreibung und den Figuren entnehmbar.

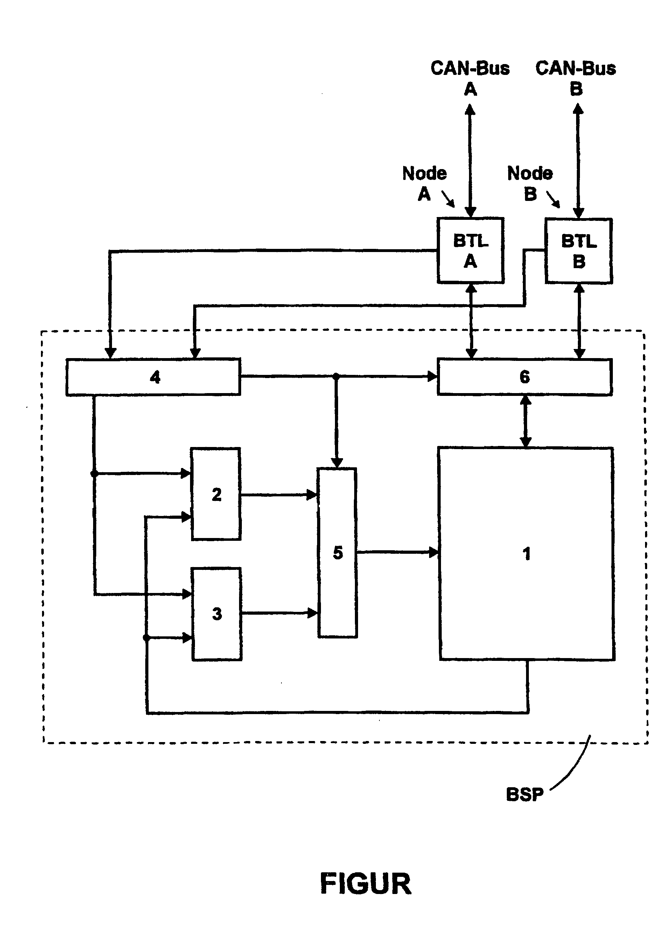

Die Erfindung wird nachfolgend anhand eines Ausführungsbeispiels unter Bezugnahme auf die Figur näher erläutert.

Die Figur zeigt ausschnittsweise den Aufbau des nachfolgend näher beschriebenen CAN-Moduls.

Das nachfolgend näher beschriebene CAN-Modul ist Bestandteil eines Mikrocontrollers, der über mehrere CAN-Busse (CAN-Knoten) mit anderen Steuereinrichtungen (beispielsweise ebenfalls Mikrocontrollern), Aktoren oder Sensoren vernetzbar ist. Es zeichnet sich dadurch aus, daß es mehrere Sätze von Speicherelementen zum Speichern von mehreren Sätzen von verschiedene Zustände des CAN-Moduls repräsentierenden Daten aufweist.

Dadurch ist es möglich, das CAN-Modul oder Teile desselben zwischen verschiedenen Zuständen hin- und herzuschalten, was seinerseits wiederum die Möglichkeit eröffnet, das CAN-Modul oder Teile desselben abwechselnd zum Betreiben mehrerer CAN-Knoten zu verwenden.

Die Zustände, die die in den mehreren Sätzen von Speicherelementen speicherbaren Datensätze repräsentieren, sind insbesondere die Zustände von schwach ausgelasteten Komponenten des CAN-Moduls. Im vorliegend betrachteten Beispiel werden in den mehreren Sätzen von Speicherelementen verschiedene Zustände des sogenannten bit stream processor repräsentierende Daten gespeichert. Dadurch kann der betreffende bit stream processor für mehrere CAN-Knoten verwendet werden. Dies erweist sich als besonders vorteilhaft, weil der bit stream processor einer der größten und kompliziertesten Bestandteile des CAN-Moduls darstellt und dessen Verwendbarkeit für mehrere CAN-Knoten eine besonders deutliche Chipflächen-Einsparung ermöglicht.

Es sei bereits an dieser Stelle darauf hingewiesen, daß keine Einschränkung darauf besteht, nur den bit stream processor auf die beschriebene Art und Weise für mehrere CAN-Knoten zu verwenden. Grundsätzlich kann zusätzlich oder alternativ auch mit anderen Komponenten des CAN-Moduls wie beschrieben verfahren werden.

Der genannte bit stream processor ist Bestandteil der sogenannten protocol machine des CAN-Moduls. Die protocol machine bildet quasi die Schnittstelle des CAN-Moduls zum CAN-Bus; sie regelt, wie die Bezeichnung schon andeutet, den Datenverkehr über den CAN-Bus unter Berücksichtigung der CAN-Spezifikation.

Die protocol machine des CAN-Moduls enthält neben dem bit stream processor noch eine sogenannte bit timing logic.

Der bit stream processor und die bit timing logic werden nachfolgend der Einfachheit halber abgekürzt als BSP-Einheit (bit stream processor) bzw. BTL-Einheit (bit timing logic) bezeichnet.

Die BTL-Einheit ist direkt mit dem CAN-Bus verbunden. Ihr obliegt es insbesondere, die Synchronisation mit dem über den CAN-Bus übertragenen Datenstrom (Bitstrom) herzustellen und für den Empfang und den Versand von Daten über den CAN-Bus zu sorgen.

Die (der BTL-Einheit vorgeschaltete) BSP-Einheit reagiert auf die von der BTL-Einheit empfangenen Daten und stößt bei Bedarf den Versand von zu versendenden Daten durch die BTL-Einheit an. Daneben sorgt sie (insbesondere durch eine entsprechende Ansteuerung der BTL-Einheit) für die Einhaltung des CAN-Protokolls beim Senden und Empfangen von Daten durch die BTL-Einheit.

Die BSP-Einheit wird, wie vorstehend bereits erwähnt wurde, als gemeinsame BSP-Einheit für mehrere CAN-Knoten verwendet. Wie sich dies praktisch bewerkstelligen läßt, wird nun anhand der Figur beschrieben. Bei der Darstellung in der Figur und der darauf bezugnehmenden Beschreibung wird davon ausgegangen, daß durch die BSP-Einheit zwei CAN-Knoten, nämlich ein erster CAN-Knoten Node A, und ein zweiter CAN-Knoten Node B bedient werden. Es sei jedoch bereits an dieser Stelle darauf hingewiesen, daß keine Einschränkung auf die Zahl zwei besteht. Die BSP-Einheit kann wegen deren schwacher Auslastung auch als gemeinsame Komponente für mehr als zwei CAN-Knoten verwendet werden.

Die BTL-Einheit ist vor allem wegen der von ihr durchzuführende Synchronisation meistens stark ausgelastet und kann daher normalerweise nicht oder jedenfalls nicht mit einem vertretbaren Aufwand als gemeinsame BTL-Einheit für die mehreren CAN-Knoten verwendet werden; im betrachteten Beispiel ist daher für jeden CAN-Knoten eine eigene BTL-Einheit vorgesehen, wobei die dem ersten CAN-Knoten Node A zugeordnete BTL-Einheit mit BTL A, und die dem zweiten CAN-Knoten Node B zugeordnete BTL-Einheit mit BTL B bezeichnet sind. Bei genügend hohem CPU-Takt kann jedoch auch eine einzige BTL-Einheit für beide oder mehrere CAN-Knoten gemeinsam verwendet werden.

Die (einzige) BSP-Einheit ist mit dem Bezugszeichen BSP bezeichnet und umfaßt einen Logik-Abschnitt 1, einen ersten Satz von Speicherelementen 2, einen zweiten Satz von Speicherelementen 3, einen Steuer-Abschnitt 4, einen ersten Multiplexer 5, und einen zweiten Multiplexer 6.

Der Logik-Abschnitt 1 ist die eigentliche BSP-Einheit. In ihm ist festgelegt, in welcher Weise auf welche Ereignisse oder Zustände zu reagieren ist. Die Reaktion des Logik-Abschnittes 1 hängt unter anderem von dessen eigenen Zustand ab. Die den Zustand des Logik-Abschnittes 1 repräsentierenden Daten sind in den beiden Speicherelemente-Sätzen 2, 3 gespeichert, wobei die im ersten Speicherelemente-Satz 2 gespeicherten Daten den Zustand des Logik-Abschnittes 1 repräsentieren, den dieser in seiner Funktion als dem ersten CAN-Knoten Node A bzw. der ersten BTL-Einheit BTL A zugeordnete BSP-Einheit innehat, und wobei die im zweiten Speicherelemente-Satz 3 gespeicherten Daten den Zustand des Logik-Abschnittes 1 repräsentieren, den dieser in seiner Funktion als dem zweiten CAN-Knoten Node B bzw. der zweiten BTL-Einheit BTL B zugeordnete BSP-Einheit innehat.

Der Logik-Abschnitt 1 arbeitet unter Berücksichtigung der im ersten Speicherelemente-Satz 2 gespeicherten Daten, wenn und so lange auf eine Anforderung oder Aktion des ersten CAN-Knotens Node A bzw. der ersten BTL-Einheit BTL A zu reagieren ist, und er arbeitet unter Berücksichtigung der im zweiten Speicherelemente-Satz 3 gespeicherten Daten, wenn und so lange auf eine Anforderung oder Aktion des zweiten CAN-Knotens Node B bzw. der zweiten BTL-Einheit BTL B zu reagieren ist.

Unter Berücksichtigung welches Datensatzes der Logik-Abschnitt 1 arbeitet, hängt vom ersten Multiplexer 5 ab; über den ersten Multiplexer 5 ist der Logik-Abschnitt 1 wahlweise mit dem ersten Speicherelemente-Satz 2 oder mit dem zweiten Speicherelemente-Satz 3 verbindbar und kann dadurch abwechselnd in den zum Bedienen des ersten CAN-Knotens Node A bzw. der ersten BTL-Einheit BTL A und in den zum Bedienen des zweiten CAN-Knotens Node B bzw. der zweiten BTL-Einheit BTL B einzunehmenden Zustand versetzt werden.

Der erste Multiplexer 5 wird vom Steuer-Abschnitt 4 angesteuert. Der Steuer-Abschnitt 4 ist mit den BTL-Einheiten BTL A und BTL B verbunden und bekommt von diesen mitgeteilt, wenn sie eine Verbindung zur BSP-Einheit benötigen. Erhält der Steuer-Abschnitt 4 von der ersten BTL-Einheit BTL A eine BSP-Anforderung, so steuert der Steuer-Abschnitt 4 den ersten Multiplexer 5 so an, daß der Logik-Abschnitt 1 mit dem ersten Speicherelemente-Satz 2 verbunden wird; erhält der Steuer-Abschnitt 4 von der zweiten BTL-Einheit BTL B eine BSP-Anforderung, so steuert der Steuer-Abschnitt 4 den ersten Multiplexer 5 so an, daß der Logik-Abschnitt 1 mit dem zweiten Speicherelemente-Satz 3 verbunden wird.

Der Steuer-Abschnitt 4 steuert auch den zweiten Multiplexer 6 an; über den zweiten Multiplexer 6 ist der Logik-Abschnitt 1 wahlweise mit der ersten BTL-Einheit BTL A oder mit der zweiten BTL-Einheit BTL B verbindbar und kann dadurch abwechselnd mit der ersten BTL-Einheit BTL A und der zweiten BTL-Einheit BTL B kommunizieren, also wechselweise den ersten CAN-Knoten Node A und den zweiten CAN-Knoten Node B bedienen.

Der Steuer-Abschnitt 4 steuert die Multiplexer 5, 6 dabei so an, daß - allgemein gesprochen -
- die Komponenten des CAN-Moduls, deren Zustand durch die in den Speicherelemente-Sätzen 2, 3 gespeicherten Daten repräsentiert wird, über den ersten Multiplexer 5 mit dem ersten Speicherelemente-Satz 2 verbunden werden, und
- die gemeinsam genutzten Komponenten des CAN-Moduls über den zweiten Multiplexer 6 mit dem ersten CAN-Knoten Node A verbunden werden,
wenn seitens des ersten CAN-Knotens Node A eine Anforderung an die gemeinsam genutzten Komponenten des CAN-Moduls vorliegt,
und daß
- die Komponenten des CAN-Moduls, deren Zustand durch die in den Speicherelemente-Sätzen 2, 3 gespeicherten Daten repräsentiert wird, über den ersten Multiplexer 5 mit dem zweiten Speicherelemente-Satz 3 verbunden werden, und
- die gemeinsam genutzten Komponenten des CAN-Moduls über den zweiten Multiplexer 6 mit dem zweiten CAN-Knoten Node B verbunden werden,
wenn seitens des zweiten CAN-Knotens Node B eine Anforderung an die gemeinsam genutzten Komponenten des CAN-Moduls vorliegt.

Auf die beschriebene Art und Weise kann die BSP-Einheit abwechselnd zwei CAN-Knoten bedienen. Die Verwendung einer einzigen BSP-Einheit für mehrere CAN-Knoten ist unkritisch, weil, wie vorstehend bereits erwähnt wurde, die BSP-Einheit nur relativ schwach ausgelastet ist.

Um sicherzustellen, daß die BSP-Einheit auf BSP-Anforderungen seitens der von dieser zu bedienenden BTL-Einheiten möglichst schnell reagieren kann, kann vorgesehen werden, daß die BSP-Einheit die möglichen Reaktionen auf zu reagierende Ereignisse bereits im Voraus, d.h. vor dem Auftreten des betreffenden Ereignisses berechnet und zwischenspeichert. Tritt dann das betreffende Ereignis auf, so kann auf dieses einfach durch Ausgabe oder Ausführung der vorausberechneten Reaktion reagiert werden.

Dies ist insbesondere, aber nicht ausschließlich für die Reaktion der BSP-Einheit auf von den BTL-Einheiten erhaltene Daten einsetzbar. Die BTL-Einheiten erwarten zumindest teilweise innerhalb einer vorbestimmten Zeit eine Antwort auf von ihnen zur BSP-Einheit übertragene Daten (Datenbits), wobei diese Antwort vom Zustand der BSP-Einheit und dem Wert des betreffenden Datenbits abhängt. Führt man die Vorausberechnung der Antwort zu einem Zeitpunkt durch, zu dem sich der für die Reaktion der BSP-Einheit maßgebliche Zustand derselben bis zum Empfang des Datenbits, auf das es zu reagieren gilt, nicht mehr ändern kann, so hängt die von der BSP-Einheit vorzunehmende Reaktion "nur" noch vom Wert des Datenbits ab, auf das es zu reagieren gilt. Da der Wert eines Datenbits nur entweder 0 oder 1 sein kann, lassen sich die möglichen Antworten problemlos vollständig im Voraus ermitteln. Die zwei möglichen Anworten (eine für den Fall, daß das als nächstes erhaltene Datenbit den Wert 0 aufweist, und eine für den Fall, daß das als nächstes erhaltene Datenbit den Wert 1 aufweist) werden zwischengespeichert und bei Bedarf, d.h. beim Auftreten des betreffenden Ereignisses ausgegeben, was verständlicherweise innerhalb kürzester Zeit möglich ist und eine verspätete Reaktion der BSP-Einheit zuverlässig ausschließt.

Das beschriebene CAN-Modul kann auf die beschriebene Art und Weise problemlos als gemeinsames CAN-Modul für mehrere CAN-Knoten verwendet werden.

## Patentansprüche

1. CAN-Modul,
**gekennzeichnet durch**
mehrere Sätze von Speicherelementen (2, 3) zum Speichern von mehreren Sätzen von verschiedene Zustände des CAN-Moduls repräsentierenden Daten.

2. CAN-Modul nach Anspruch 1,
**dadurch gekennzeichnet,**
**daß** das CAN-Modul zur Bedienung eines ersten CAN-Knotens (Node A) und eines zweiten CAN-Knotens (Node B) ausgelegt ist, und daß die Komponenten des CAN-Moduls, deren Zustand durch die in den Speicherelemente-Sätzen (2, 3) gespeicherten Daten repräsentiert wird, gemeinsam genutzte Komponenten sind, die abwechselnd dem ersten CAN-Knoten (Node A) oder dem zweiten CAN-Knoten (Node B) zugeordnet werden können.

3. CAN-Modul nach Anspruch 2,
**dadurch gekennzeichnet,**
**daß** die gemeinsam genutzten Komponenten normalerweise schwach ausgelastete Komponenten des CAN-Moduls sind.

4. CAN-Modul nach Anspruch 2 oder 3,
**dadurch gekennzeichnet,**
**daß** zu den gemeinsam genutzten Komponenten die für die Einhaltung des CAN-Protokolls sorgende Komponente (BSP) des CAN-Moduls zählt.

5. CAN-Modul nach einem der vorhergehenden Ansprüche,
**dadurch gekennzeichnet,**
**daß** ein erster Multiplexer (5) vorgesehen ist, über welchen die Komponenten des CAN-Moduls, deren Zustand durch die in den Speicherelemente-Sätzen (2, 3) gespeicherten Daten repräsentiert wird, wahlweise mit dem ersten Speicherelemente-Satz (2) oder mit dem zweiten Speicherelemente-Satz (3) verbindbar ist.

6. CAN-Modul nach einem der Ansprüche 2 bis 5,
**dadurch gekennzeichnet,**
**daß** ein zweiter Multiplexer (6) vorgesehen ist, über welchen die gemeinsam genutzten Komponenten des CAN-Moduls wahlweise mit dem ersten CAN-Knoten (Node A) oder mit dem zweiten CAN-Knoten (Node B) verbindbar sind.

7. CAN-Modul nach Anspruch 5 oder 6,
**dadurch gekennzeichnet,**
**daß**
- die Komponenten des CAN-Moduls, deren Zustand durch die in den Speicherelemente-Sätzen (2, 3) gespeicherten Daten repräsentiert wird, über den ersten Multiplexer (5) mit dem ersten Speicherelemente-Satz (2) verbunden werden, und
- die gemeinsam genutzten Komponenten des CAN-Moduls über den zweiten Multiplexer (6) mit dem ersten CAN-Knoten (Node A) verbunden werden,
wenn seitens des ersten CAN-Knotens (Node A) eine Anforderung an die gemeinsam genutzten Komponenten des CAN-Moduls vorliegt.

8. CAN-Modul nach einem der Ansprüche 5 bis 7,
**dadurch gekennzeichnet,**
**daß**
- die Komponenten des CAN-Moduls, deren Zustand durch die in den Speicherelemente-Sätzen (2, 3) gespeicherten Daten repräsentiert wird, über den ersten Multiplexer (5) mit dem zweiten Speicherelemente-Satz (3) verbunden werden, und
- die gemeinsam genutzten Komponenten des CAN-Moduls über den zweiten Multiplexer (6) mit dem zweiten CAN-Knoten (Node B) verbunden werden,
wenn seitens des zweiten CAN-Knotens (Node B) eine Anforderung an die gemeinsam genutzten Komponenten des CAN-Moduls vorliegt.

9. CAN-Modul nach einem der Ansprüche 2 bis 8,
**dadurch gekennzeichnet,**
**daß** mögliche Reaktionen der gemeinsam genutzten Komponenten des CAN-Moduls auf Anforderungen seitens der CAN-Knoten (Node A, Node B) im Voraus ermittelt und bis zum Auftreten der betreffenden Anforderung zwischengespeichert werden.

## Claims

1. CAN module,
**characterized by**
a plurality of sets of memory elements (2, 3) for storing a plurality of sets of data representing various states of the CAN module.

2. CAN module according to Claim 1,
**characterized**
**in that** the CAN module is designed to serve a first CAN node (Node A) and a second CAN node (Node B), and in that the components of the CAN module, the state of which components is represented by the data stored in the memory element sets (2, 3), are jointly used components which can be alternately allocated to the first CAN node (Node A) or to the second CAN node (Node B).

3. CAN module according to Claim 2,
**characterized**
**in that** the jointly used components are components of the CAN module which normally have a low utilization level.

4. CAN module according to Claim 2 or 3,
**characterized**
**in that** the jointly used components include the CAN module's component (BSP) which ensures observance of the CAN protocol.

5. CAN module according to one of the preceding claims,
**characterized**
**in that** a first multiplexer (5) is provided which can be used to connect the components of the CAN module, the state of which components is represented by the data stored in the memory element sets (2, 3), either to the first memory element set (2) or to the second memory element set (3).

6. CAN module according to one of Claims 2 to 5,
**characterized**
**in that** a second multiplexer (6) is provided which can be used to connect the jointly used components of the CAN module either to the first CAN node (Node A) or to the second CAN node (Node B).

7. CAN module according to Claim 5 or 6,
**characterized**
**in that**
- the components of the CAN module, the state of which components is represented by the data stored in the memory element sets (2, 3), are connected to the first memory element set (2) by means of the first multiplexer (5), and
- the jointly used components of the CAN module are connected to the first CAN node (Node A) by means of the second multiplexer (6),
if the first CAN node (Node A) has a request to the jointly used components of the CAN module.

8. CAN module according to one of Claims 5 to 7,
**characterized**
**in that**
- the components of the CAN module, the state of which components is represented by the data stored in the memory element sets (2, 3), are connected to the second memory element set (3) by means of the first multiplexer (5), and
- the jointly used components of the CAN module are connected to the second CAN node (Node B) by means of the second multiplexer (6),
if the second CAN node (Node B) has a request to the jointly used components of the CAN module.

9. CAN module according to one of Claims 2 to 8,
**characterized**
**in that** possible reactions of the jointly used components of the CAN module to requests from the CAN nodes (Node A, Node B) are ascertained in advance and are buffer-stored until the request in question arises.

## Revendications

1. Module CAN **caractérisé par** plusieurs ensembles d'éléments mémoire (2, 3) destinés au stockage de données représentant plusieurs ensembles d'états différents du module CAN.

2. Module CAN selon la revendication 1, **caractérisé en ce que** le module CAN est configuré pour l'utilisation d'un premier noeud CAN (noeud A) et d'un second noeud CAN (noeud B) et **en ce que** les composants du module CAN, dont l'état est représenté par les données stockées dans les ensembles d'éléments mémoire (2, 3), sont des composants utilisés en commun, qui peuvent être alloués de manière alternative au premier noeud CAN (noeud A) ou bien au second noeud CAN (noeud B).

3. Module CAN selon la revendication 2, **caractérisé en ce que** les composants utilisés en commun sont normalement des composants faiblement sollicités du module CAN.

4. Module CAN selon la revendication 2 ou 3, **caractérisé en ce que** le composant assurant le respect du protocole CAN (BSP) du module CAN compte parmi les composants utilisés en commun.

5. Module CAN selon l'une des revendications précédentes, **caractérisé en ce qu'**un premier multiplexeur (5) est prévu, permettant de relier les composants du module CAN dont l'état est représenté par les données stockées dans les ensembles d'éléments mémoire (2, 3), au choix au premier ensemble d'éléments mémoire (2) ou au second ensemble d'éléments mémoire (3).

6. Module CAN selon l'une des revendications 2 à 5, **caractérisé en ce qu'**un second multiplexeur (6) est prévu, permettant de relier les composants utilisés en commun du module CAN, au choix au premier noeud CAN (noeud A) ou au second noeud CAN (noeud B).

7. Module CAN selon la revendication 5 ou 6, **caractérisé en ce que**
- les composants du module CAN, dont l'état est représenté par les données stockées dans les ensembles d'éléments mémoire (2, 3), sont reliés au premier ensemble d'éléments mémoire (2) par le biais du premier multiplexeur (5), et
- les composants utilisés en commun du module CAN sont reliés au premier noeud CAN (noeud A) par l'intermédiaire du second multiplexeur (6),
si le premier noeud CAN (noeud A) sollicite les composants utilisés en commun du module CAN.

8. Module CAN selon l'une des revendications 5 à 7, **caractérisé en ce que**
- les composants du module CAN, dont l'état est représenté par les données stockées dans les ensembles d'éléments mémoire (2, 3), sont reliés au second ensemble d'éléments mémoire (3) par le biais du premier multiplexeur (5), et
- les composants utilisés en commun du module CAN sont reliés au second noeud CAN (noeud B) par l'intermédiaire du second multiplexeur (6),
si le second noeud CAN (noeud B) sollicite les composants utilisés en commun du module CAN.

9. Module CAN selon l'une des revendications 2 à 8, **caractérisé en ce que** les réactions possibles des composants utilisés en commun du module CAN aux demandes du noeud CAN (noeud A, noeud B) sont déterminées au préalable et stockées dans une mémoire-tampon jusqu'à l'apparition de la demande correspondante.
